# EUROPEAN PATENT APPLICATION

(11) **EP 4 550 808 A1**
(43) Date of publication of application: **07.05.2025**
(21) Application number: 22950336.2
(22) Date of filing: 06.07.2022
(51) Int. Cl.: H04N 21/432, H04N 21/431, H04N 21/435, H04N 21/482, H04N 21/232, G06F 16/78, G06F 16/738

(54) **DISPLAY DEVICE AND OPERATING METHOD THEREFOR**

(71) Applicant: LG Electronics Inc., Yeongdeungpo-gu Seoul 07336 (KR)
(72) Inventor: KIM, Taejoon, Seoul 06772 (KR); LEE, Jaekyung, Seoul 06772 (KR)
(74) Representative: Frenkel, Matthias Alexander
(86) International application number: PCT/KR2022/009724
(87) International publication number: WO 2024/010110

(57) **Abstract**

The objective of the present disclosure is to provide search convenience when executing a multi-view function, and the display device may comprise: a network interface; a display for displaying, on a first split screen, a first image corresponding to a first application that provides real-time broadcasting, and displaying, on a second split screen, a second image corresponding to a second application that supports a search function; and a controller for acquiring broadcast information about the first image, transmitting, through the network interface, a search request for the acquired broadcast information to a server that provides a service for the second application, receiving, through the network interface, search results for the broadcast information from the server, and displaying the received search results on the second split screen.

## Description

### TECHNICAL FIELD

An objective of the present disclosure is to provide a display device that efficiently provides a search function.

### BACKGROUND ART

Digital TV services using wired or wireless communication network are becoming popular. Such a digital TV service may provide various services that may not be provided by the existing analog broadcasting service.

For example, in the case of IPTV (Internet Protocol Television) or smart TV service, which is a , digital TV service type, it may provide bidirectionality in which a user may actively select a type of viewing program and a viewing time. IPTV and smart TV services may provide various additional services such as Internet search, home shopping, online games, etc. based on the bidirectionality.

In addition, recently, a multi-view function of providing an image of each application by executing two applications at the same time is being provided.

However, in the related art, when providing the multi-view function, there were limitations in linkage between the two applications.

### DISCLOSURE OF THE INVENTION

### TECHNICAL PROBLEM

An objective of the present disclosure is to enable, when executing a multi-view function, to search for information about one view through a search application for another view.

Another objective of the purpose of this disclosure is to quickly and conveniently provide related information about a broadcast program when playing the broadcast program through a multi-view function.

### TECHNICAL SOLUTION

A display device according to an embodiment of the present disclosure may include a network interface, a display configured to display a first image, which corresponds to a first application that provides real-time broadcasting, on a first split screen, and a second image, which corresponds to a second application that supports a search function, on a second split screen, and a controller configured to: acquire broadcast information about the first image; transmit a search request for the acquired broadcast information to a server configured to provide a service for the second application through the network interface; receive search results for the broadcast information from the server through the network interface; and display the received search results on the second split screen.

A method for operating a display device according to an embodiment of the present disclosure may include displaying each of a first image corresponding to a first application that provides real-time broadcasting on a first split screen and a second image corresponding to a second application that supports a search function on a second split screen, acquiring broadcast information about the first image, transmitting a search request for the acquired broadcast information to a server configured to provide a service for the second application through a network interface, receiving search results for the broadcast information from the server through the network interface, and displaying the received search results on the second split screen.

### ADVANTAGEOUS EFFECTS

According to the embodiment of the present disclosure, when the multi-view function is executed, the content associated with the broadcast program may be automatically searched. Thus, the user's search convenience may be improved, and the desired search information may be obtained quickly

According to the embodiment of the present disclosure, when the multi-view function is executed, the content associated with the meta information of the broadcast program may be automatically searched. Therefore, the convenience of the user searches may be improved, and the desired information may be quickly searched when watching the live broadcast images.

### BRIEF DESCRIPTION OF THE DRAWINGS

FIG. 1 is a block diagram illustrating a configuration of a display device according to an embodiment of the present disclosure.
FIG. 2 is a block diagram illustrating a remote control device according to an embodiment of the present disclosure
FIG. 3 is a view illustrating an actual configuration of a remote control device according to an embodiment of the present disclosure.
FIG. 4 is a view illustrating an example of utilizing a remote control device according to an embodiment of the present disclosure.
FIG. 5 is a view for explaining a detailed configuration of a controller according to an embodiment of the present disclosure.
FIG. 6 is a flowchart for explaining an operating method of a display device according to an embodiment of the present disclosure.
FIGS. 7 to 9 are views for explaining a scenario for automatically searching for a program name when executing a multi-view function according to an embodiment of the present disclosure.
FIGS. 10 to 12b are views for explaining a process of performing a search by providing a menu when executing the multi-view function according to an embodiment of the present disclosure.
FIG. 13 is a view for explaining a process of performing a search through a search application when using a search function while executing the multi-view function according to another embodiment of the present disclosure.
FIG. 14 is a view for explaining a process of performing a search through a search application when using a music function while executing the multi-view function according to another embodiment of the present disclosure.

### MODE FOR CARRYING OUT THE INVENTION

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

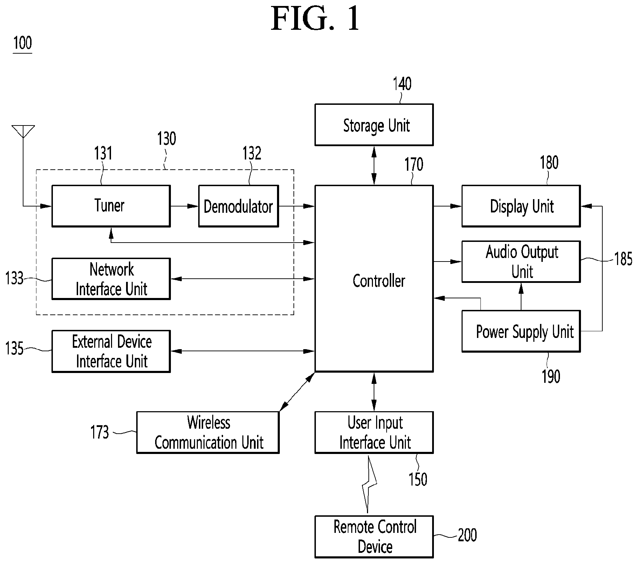

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

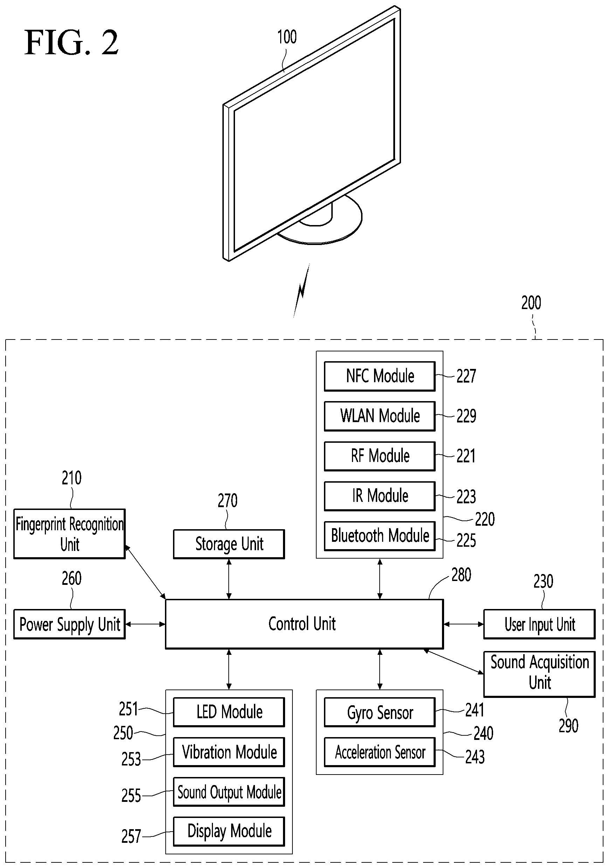

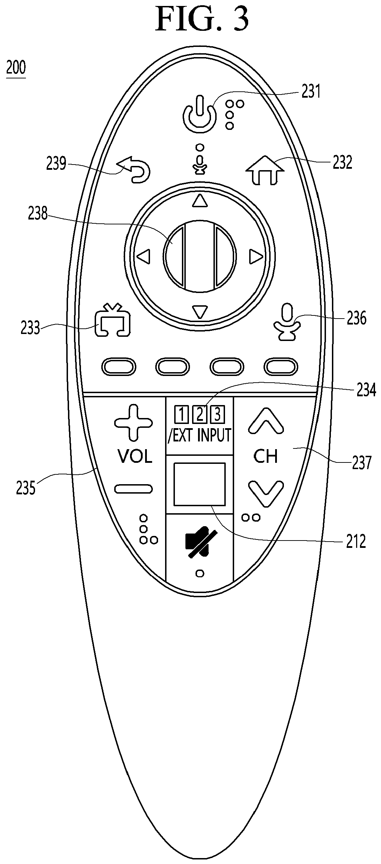

A remote control device according to an embodiment of the present disclosure will be described with reference to FIGS. 2 and 3.

FIG. 2 is a block diagram illustrating a remote control device according to an embodiment of the present disclosure and FIG. 3 is a view illustrating an actual configuration of a remote control device according to an embodiment of the present disclosure.

First, referring to FIG. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to FIG. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

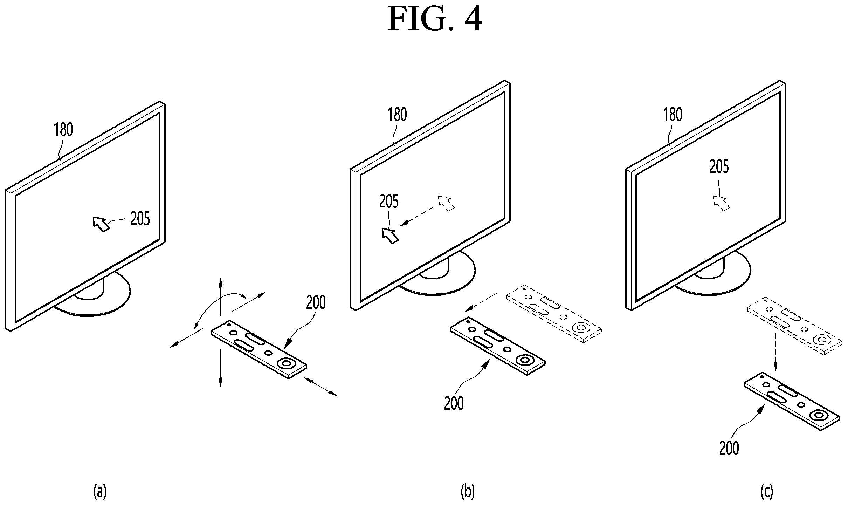

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

FIG. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement may not be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

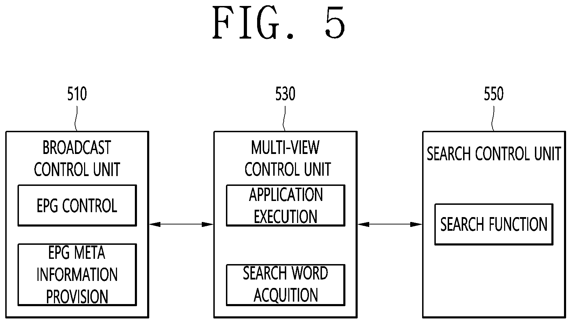

FIG. 5 is a view for explaining a detailed configuration of a controller according to an embodiment of the present disclosure.

The controller 170 may include a broadcast control unit 510, a multi-view control unit 530, and a search control unit 550.

The broadcast control unit 510 may manage an electronic program guide.

The broadcast control unit 510 may extract meta information from an EPG to transmit the extracted meta information to the multi-view control unit 530.

The multi-view control unit 530 may receive a request for executing a multi-view, split a screen of the display 180 according to the received request, and display an image on each of the split screens.

The multi-view control unit 530 may control an execution of an application to display an execution image of a different application on each of the split screens.

The multi-view control unit 530 may request the EPG meta information of the broadcast image displayed on the split screen from the broadcast control unit 510 and receive the EPG meta information in response to the request.

The multi-view control unit 530 may obtain search words for searching related contents using the received EPG meta information and transmit the obtained search words to the search control unit 550.

The search control unit 550 may perform a search on the basis of the search words received from the multi-view control unit 530.

The search control unit 550 may perform the search for the search words through an application that supports a search function and output the search results on the display 180.

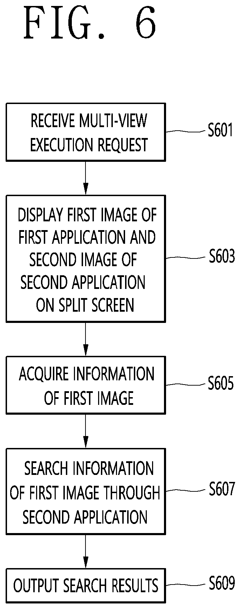

FIG. 6 is a flowchart for explaining an operating method of a display device according to an embodiment of the present disclosure.

Hereinafter, an app is an abbreviation for application.

The controller 170 of the display device 100 may receive a multi-view execution request (S601).

In an embodiment, the controller 170 may receive the multi-view execution request from a remote control device 200 via a user input interface 150.

In another embodiment, the controller 170 may receive the multi-view execution request via a user voice input.

In an embodiment, the controller 170 may receive the multi-view execution request while displaying the content image on the display 180.

The content image may be an execution image of a first application described later.

The controller 170 of the display device 100 may display a first image of the first application and a second image of a second application on the split screen of the display 180 upon receiving the multi-view execution request (S603).

In an embodiment, the first image may be an image resulting from the execution of the first application, and the second image may be an image resulting from the execution of the second application.

The first application may be a main application, and the second application may be a sub application, but are just examples, and the first and second applications may be interchanged.

The first application may be a Live TV application that provides a real-time broadcast image, and the second application may be an application that supports the search function.

The controller 170 may split the screen of the display 180 into two split screens according to the multi-view execution request. Here, the two screens may be a just example, and the screen of the display 180 may be split into two or more screens depending on the multi-view execution request.

When the controller 170 receives the multi-view execution request while displaying the first image of the first application on the display 180, the controller may reduce the first image to display the first image on the first split screen and display the second image of the second application on the second split screen.

The controller 170 of the display device 100 may acquire information of the first image displayed on the split screen (S605) and perform a search for information of the first image through the second application (S607).

In an embodiment, the information of the first image may be broadcast information.

The broadcast information may be EPG information. The EPG information may include one or more of a title of the broadcast program, a program ID that identifies the broadcast program, and a subtitle of the program.

The broadcast information may be EPG meta information. The EPG meta information may include one or more of background music information, character information, and plot information (or episode information) of the broadcast program.

The controller 170 may request the EPG information of the first image from an external device (e.g., a set-top box) and receive the EPG information from the external device.

Specifically, the multi-view control unit 530 provided in the controller 170 may request the EPG information of the first image from the broadcast control unit 510.

In an embodiment, the broadcast control unit 510 may request the EPG information from the external device connected through an external device interface 135 and receive the EPG information from the external device.

In another embodiment, the EPG information may be stored in a memory 140. In this case, the broadcast control unit 510 may extract the EPG information of the first image from the EPG stored in the memory 140 and provide the extracted EPG information to the multi-view control unit 530.

The controller 170 may perform a search for information on the first image through the second application that supports the search function. Specifically, the controller 170 may transmit a search word for the first image to an application server that provides a search service through the second application and receive search results for the search word from the application server.

The controller 170 of the display device 100 may output the search results according to the search execution results (S609).

In an embodiment, the controller 170 may display the search results on the split screen on which the second image is displayed.

The search results may be any one of a video, an image, or a website based on the search word.

In another embodiment, the controller 170 may transmit the search results to a mobile terminal, such as a user's smartphone, via a wireless communication interface 173.

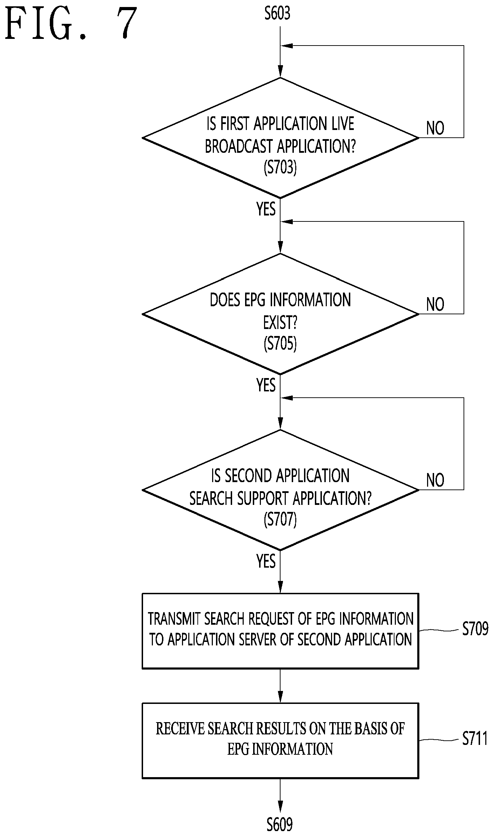

FIGS. 7 to 9 are views for explaining a scenario for automatically searching for a program name when executing the multi-view function according to an embodiment of the present disclosure.

In FIGS. 7 to 9, it is assumed that the first image of the first application is displayed on each of the two split screens, and the second image of the second application is being displayed.

First, FIG. 7 will be described.

FIG. 7 is a view for explaining a process after the operation S603 in the embodiment of FIG. 6, and detailed description of the duplicated steps will be omitted.

Referring to FIG. 7, the controller 170 of the display device 100 may determine whether the first application is a real-time broadcast application that provides a real-time broadcast image (S703).

In an embodiment, the controller 170 may determine whether a real-time broadcasting application is executed by using identification information of the first application executed on the screen. The first image provided through the first application may be a live broadcast image.

The controller 170 of the display device 100 may determine whether the EPG information of the first image, which is the real-time broadcast image, exists when the first application is the real-time broadcast image providing the real-time broadcast image (S705).

In an embodiment, the EPG information may include one or more of an ID, a subtitle, a name, a genre, and a remaining broadcast time of the program that is a live broadcast image.

In an embodiment, the controller 170 may receive an EPG set from a set-top box connected to the display device 100 and confirm whether the received EPG set includes the EPG information of the real-time broadcast image.

In another embodiment, the controller 170 may determine whether the EPG information of the first image, which is the real-time broadcast image, is stored in the memory 140.

The controller 170 of the display device 100 may determine whether the second application is an application that supports the search function when the EPG information of the first image exists (S707).

The application that supports the search function may be an application that searches for videos, images, and websites related to the search word and provides search results.

The controller 170 of the display device 100 may transmit a search request for the EPG information to the application server of the second application when the second application is an application that supports the search function (S709).

The application server of the second application may be a server that provides a search service through the second application.

The controller 170 may transmit the search request for the EPG information to the application server via the network interface 133.

Upon receiving the search request, the application server may search for one or more contents related to a program name contained in EPG information and transmit information about the one or more searched contents to the display device 100.

The information about the contents may include one or more of a thumbnail image of the content, an access address that accesses the content, a name of the content, and a source providing the content.

The controller 170 of the display device 100 may receive the search results on the basis of the EPG information from the application server (S711) and output the received search results (S609).

The controller 170 may receive the search results on the basis of the EPG information through the network interface 133.

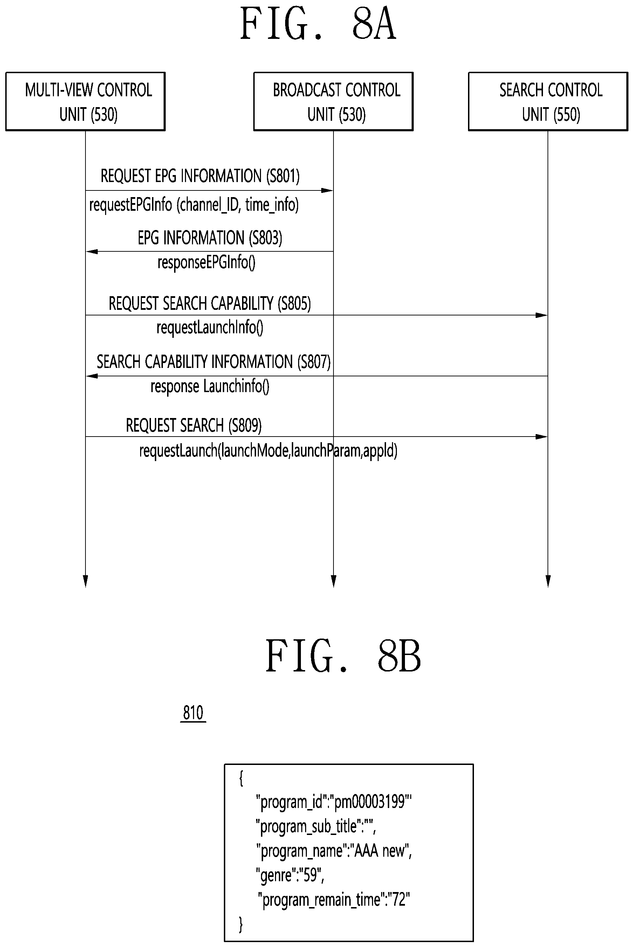

FIG. 8a is a view illustrating a process of acquiring the EPG information of the real-time broadcast image and generating the search requests on the basis of the EPG information according to an embodiment of the present disclosure.

Operations S801 and S803 of FIG. 8a may be processes that embody operation S705 of FIG. 7, operations S805 and S807 may be views that embody operation S707, and operation S809 may correspond to operation S709.

The multi-view control unit 530 may request the EPG information of the real-time broadcast image from the broadcast control unit 510 (S801), and the broadcast control unit 510 may transmit the EPG information to the multi-view control unit 530 in response to the received request (S803).

The EPG information may include a program ID (or channel ID), a program's subtitle, a program's name, a program's genre, and a remaining airing time.

Referring to FIG. 8b, EPG information 810 of the real-time broadcast image is illustrated.

The broadcast control unit 510 may acquire the EPG information 810 from a set-top box connected to the memory 140 or the display device 100.

When the EPG information is acquired, the multi-view control unit 530 may request the search capability of the second application (S805) and receive the search capability information of the second application in response to the request (S807).

The request for the search capabilities may be a request to inquire whether the second application supports the search function.

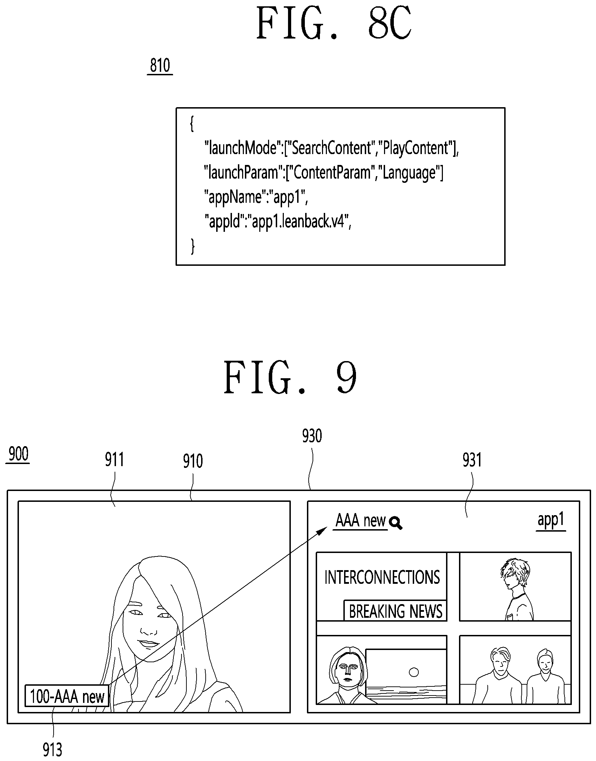

The search capability information will be described with reference to FIG. 8c.

The search capability information may include one or more of second application's launch mode information, launch parameter information, application's name, and application's ID.

The launch mode information may include information indicating whether content search for ELG information is possible and whether the search for the EPG information is possible.

The launch parameter information may include information about additional functions, such as languages that are searchable through the application.

The multi-view control unit 530 may transmit the search request for the EPG information through the second application to the search control unit 550 on the basis of the search capability information of the second application (S809).

If the multi-view control unit 530 determines that the second application supports the content search function through the search capability information, the search request for the EPG information may be transmitted to the search control unit 550.

The search request may include a value for the launch mode (search or play) for the EPG information, a value for the launch parameter (language), and the application ID identifying the second application.

The search control unit 550 may transmit the search request for the EPG information to the application server of the second application through the network interface 133.

The search control unit 550 may receive search results for the EPG information from the application server through the network interface 133.

Referring to FIG. 9, the screen 900 of the display 180 may include a first split screen 910 and a second split screen 930.

The real-time broadcast program 911 provided through the real-time broadcast application may be displayed on the first split screen 910.

Search results 931 for the name 913 of the broadcast program 911 may be displayed on the second split screen 930 through a search application.

The display device 100 may acquire the EPG information of the broadcast program 911 that is being played through the real-time broadcast application and transmit the acquired EPG information to the application server of the search application. The EPG information may include the name 913 of the broadcast program 911.

The display device 100 may receive search result information for the name 913 of the broadcast program 911 from the application server and display search results 931 on the basis of the received search result information on the second split screen 930.

The search results 931 may include contents associated with the program name 913.

For example, the search results 931 may include video, image, and website information associated with the program name 913.

As described above, according to the embodiment of the present disclosure, when the multi-view function is executed, the content associated with the broadcast program may be automatically searched. Thus, the user's search convenience may be improved, and the desired search information may be obtained quickly.

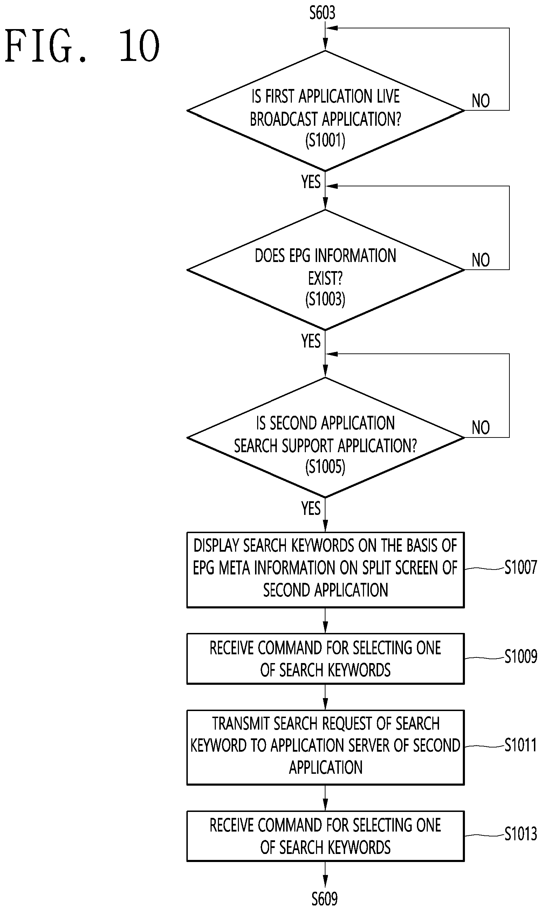

FIGS. 10 to 12b are views for explaining a process of performing a search by providing a menu when executing the multi-view function according to an embodiment of the present disclosure.

In FIGS. 10 to 12b, it is assumed that the first image of the first application is displayed on each of the two split screens, and the second image of the second application is being displayed.

First, FIG. 10 will be described.

FIG. 10 is a view for explaining a process after the operation S603 in the embodiment of FIG. 6, and detailed description of the duplicated operations (steps) will be omitted.

Referring to FIG. 10, the controller 170 of the display device 100 may determine whether the first application is a real-time broadcast application that provides a real-time broadcast image (S1001).

In an embodiment, the controller 170 may determine whether a real-time broadcasting application is executed by using identification information of the first application executed on the screen. The first image provided through the first application may be a live broadcast image.

The controller 170 of the display device 100 may determine whether the EPG information of the first image, which is the real-time broadcast image, exists when the first application is the real-time broadcast image providing the real-time broadcast image (S1003).

In an embodiment, the EPG information may include one or more of an ID, a subtitle, a name, a genre, and a remaining broadcast time of the program that is a live broadcast image.

In an embodiment, the controller 170 may receive an EPG set from a set-top box connected to the display device 100 and confirm whether the received EPG set includes the EPG information of the real-time broadcast image.

In another embodiment, the controller 170 may determine whether the EPG information of the first image, which is the real-time broadcast image, is stored in the memory 140.

The controller 170 of the display device 100 may determine whether the second application is an application that supports the search function when the EPG information of the first image exists (S1005).

The application that supports the search function may be an application that searches for videos, images, and websites related to the search word and provides search results.

The controller 170 of the display device 100 may display search keywords on the basis of the EPG meta information on the split screen corresponding to the second application when the second application is an application that supports the search function (S1007).

In an embodiment, when the controller 170 acquires the EPG information of the first image, the EPG meta information may also be acquired.

The EPG meta information may include one or more of a name of an actor appearing in the program, background music of the program, and synopsis.

The controller 170 may acquire the actor's name, the background music, and synopsis contained in the EPG meta information as search keywords.

The controller 170 may display a search menu including the acquired search keywords on the split screen corresponding to the second application.

The controller 170 of the display device 100 may receive a command for selecting one of the search keywords (S1009).

The controller 170 may receive a command for selecting one of the search keywords from the remote control device 200.

The controller 170 of the display device 100 may transmit a search request for the selected search keyword to the application server of the second application according to the command (S1011).

The controller 170 may transmit the search request for the selected search keyword to the application server through the network interface 133.

The controller 170 of the display device 100 may receive search results for the search keywords from the application server (S1013) and output the received search results (S609).

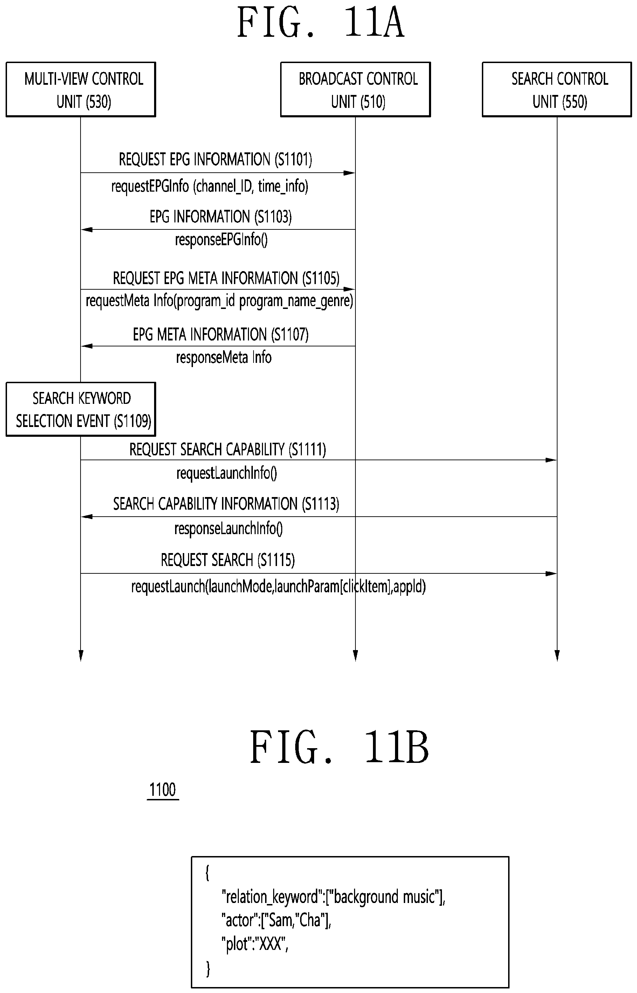

FIG. 11a is a view for explaining a process of acquiring the EPG meta information of the real-time broadcast image and performing the search on the basis of the acquired EPG meta information.

The multi-view control unit 530 may request the EPG information of the real-time broadcast image from the broadcast control unit 510 (S1101), and the broadcast control unit 510 may transmit the EPG information to the multi-view control unit 530 in response to the received request (S1103).

The EPG information may include a program ID (or channel ID), a program's subtitle, a program's name, a program's genre, and a remaining airing time.

The description of the EPG information may be replaced with the description in FIG. 8b.

The broadcast control unit 510 may acquire the EPG information 810 from a set-top box connected to the memory 140 or the display device 100.

The multi-view control unit 530 may request the EPG meta information of the real-time broadcast image from the broadcast control unit 510 on the basis of the received EPG information (S1105), and the broadcast control unit 510 may transmit the EPG information to the multi-view control unit 530 in response to the received request (S1107).

The multi-view control unit 530 may transmit the request including the EPG information to the broadcast control unit 510, and the broadcast control unit 510 may extract the EPG meta information including the plurality of search keywords on the basis of the EPG information. The broadcast control unit 510 may transmit the extracted EPG meta information to the multi-view control unit 530.

The EPG meta information will be described with reference to FIG. 11b.

Referring to FIG. 11b, the EPG meta information 1100 is illustrated. The EPG meta information may include information about the program's background music, the actor appearing, and the program's synopsis (or episode information). Each of the background music, the actor name, and the synopsis may be search keywords.

The multi-view control unit 530 may receive an event for selecting one of the plurality of search keywords (S1109).

When the event is received, the multi-view control unit 530 may request the search control unit 550 for the search capability of the second application (S1111) and receive the search capability information of the second application in response to the request (S1113).

The request for the search capabilities may be a request to inquire whether the second application supports the search function.

The search capability information will be replaced with those in FIG. 8c.

The multi-view control unit 530 may transmit the search request for the EPG information through the second application to the search control unit 550 on the basis of the search capability information of the second application (S1115).

If the multi-view control unit 530 determines that the second application supports the content search function through the search capability information, the search request for the EPG information may be transmitted to the search control unit 550.

The search request may include a value for the launch mode (search or play) for the EPG information, a value for the launch parameter (language, selected search keywords, etc.), and the application ID identifying the second application. That is, the value of the launch parameters may include additional selected search keywords.

The search control unit 550 may transmit a search request for the search keywords to the application server of the second application through the network interface 133.

The search control unit 550 may receive the search results for the search keywords from the application server through the network interface 133.

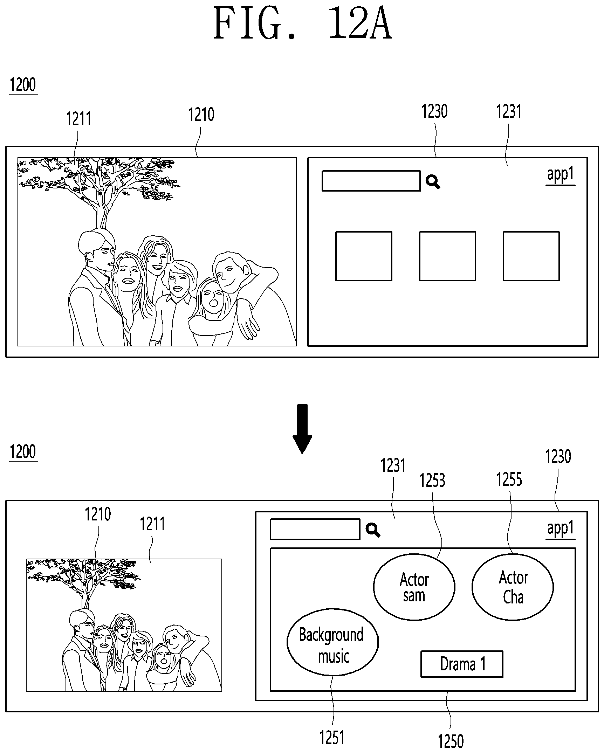

Referring to FIG. 12a, the screen 1200 of the display 180 may include a first split screen 1210 and a second split screen 1230.

The real-time broadcast program 1211 provided through the real-time broadcast application may be displayed on the first split screen 1210.

An execution image 1231 of the search application may be displayed on the second split screen 1230.

The display device 100 may receive a command for providing a search menu from the remote control device 200. The user may press an OK button on the remote control device 200 for a certain period of time while the multi-view function is executed to receive the search menu.

The display device 100 may acquire the EPG meta information of the broadcast program 1211 being played through the real-time broadcast application according to the command for providing the search menu, and display a search menu 1250 including the plurality of search keywords 1251, 1253, and 1255 on the second split screen 1230 on the basis of the EPG meta information.

Simultaneously, the display device 100 may reduce a size of the first split screen 1210 and enlarge a size of the second split screen 1230.

When one of the plurality of search keywords 1251, 1253, and 1255 is selected, the display device 100 may request the search request for the selected search keyword to the application server of the second application.

The display device 100 may display search results for search keywords received from the application server on the second split screen 1230.

The search results may include video, image, and website information associated with the search keywords.

As described above, according to the embodiment of the present disclosure, when the multi-view function is executed, the content associated with the meta information of the broadcast program may be automatically searched. Therefore, the convenience of the user searches may be improved, and the desired information may be quickly searched when watching the live broadcast images.

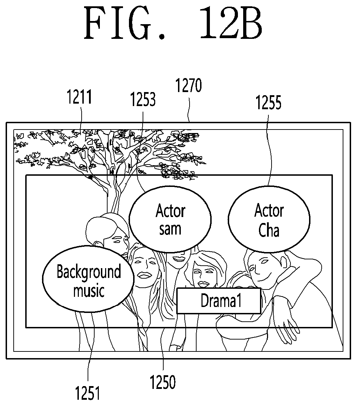

Referring to FIG. 12b, a search menu 1250 may be provided even in a single view state (a state in which a view is provided through one application) rather than a multi-view state.

The display device 100 may receive a request for providing the search menu during playback of the real-time broadcast program 1211 on the screen 1270.

The display device 100 may acquire the EPG meta information of the broadcast program 1211 according to the received request and display the search menu 1250 on the screen 1270 on the basis of the acquired meta information. The search menu 1250 may be displayed to overlap the broadcast program 1211.

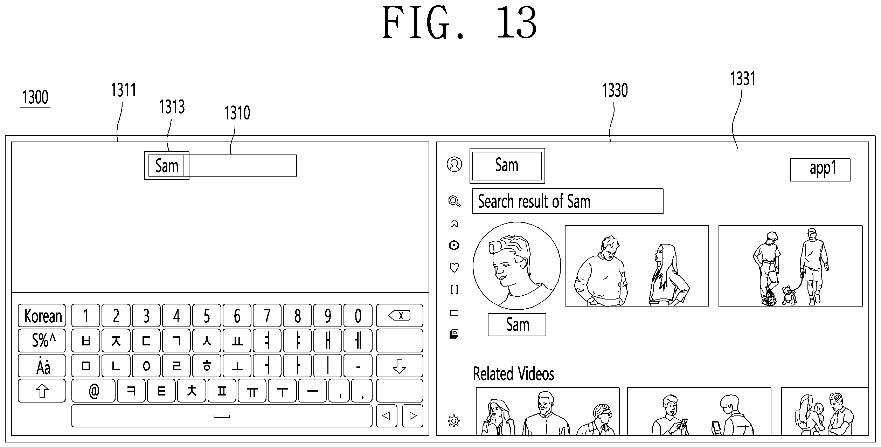

FIG. 13 is a view for explaining a process of performing a search through a search application when using a search function while executing the multi-view function according to another embodiment of the present disclosure.

Referring to FIG. 13a, a screen 1300 of the display 180 may include a first split screen 1310 and a second split screen 1330.

A real-time broadcast program provided through a real-time broadcast application and a search window 1311 overlapping the broadcast program may be displayed on the first split screen 1310.

The search window 1311 may be a window for a search function on the display device 100.

An execution image 1331 of the search application may be displayed on the second split screen 1330.

When a search word 1313 is input into the search window 1311, the display device 100 may transmit a search request for the search word 1313 to the application server of the search application.

That is, when the search application is executed, the display device 100 may perform a search for the input search word 1313 through the application server of the search application instead of performing the search on its own.

The display device 100 may receive search results for the search word 1313 through the application server of the search application and display the received search results on the second split screen 1330.

As described above, according to an embodiment of the present disclosure, when the search application is executed in a multi-view function, search results for a search word input into a search window of another split screen may be performed through the search application.

Thus, rich and diverse search results for the search words may be provided to the user.

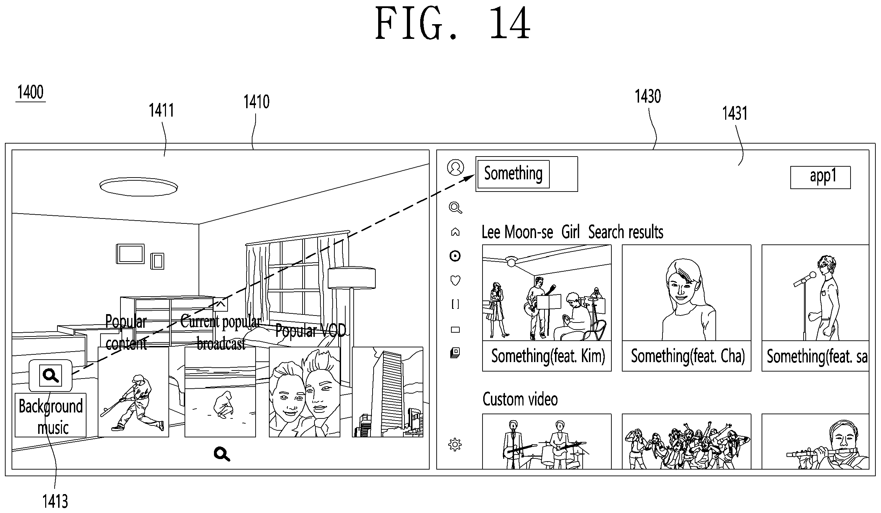

FIG. 14 is a view for explaining a process of performing a search through a search application when using a music function while executing the multi-view function according to another embodiment of the present disclosure.

Referring to FIG. 14a, a screen 1400 of the display 180 may include a first split screen 1410 and a second split screen 1430.

A real-time broadcast program 1411 and a background music search icon 1413 provided through a real-time broadcast application may be displayed on the first split screen 1410.

The background music search icon 1413 may be an icon for searching for background music output together with the broadcast program 1411.

An execution image 1431 of the search application may be displayed on the second split screen 1430.

The display device 100 may acquire EPG meta information including background music information of the broadcast program 1413 when the background music search icon 1413 is selected.

The display device 100 may transmit the background music information to an application server of a search application. That is, the search application may perform a search for the background music information.

When the search application is executed, the display device 100 may perform a search for the background music through the application server of the search application instead of performing the search on its own.

The display device 100 may receive search results for the background music through the application server of the search application and display the received search results on the second split screen 1430.

As described above, according to an embodiment of the present disclosure, when the search application is executed in a multi-view function, search results for the background music played on another split screen may be performed through the search application.

According to the embodiments of the present disclosure, the above-described method may also be embodied as processor readable codes on a processor readable recording medium. Examples of the processor readable medium include read-only memory (ROM), random-access memory (RAM), CD-ROMs, magnetic tapes, floppy disks, and optical data storage devices.

The display device described above is not limited to the configuration and method of the embodiments described above, and the embodiments may be configured by selectively combining all or portion of the embodiments so that various modifications may be made.

## Claims

1. A display device comprising:
a network interface;
a display configured to display a first image, which corresponds to a first application that provides real-time broadcasting, on a first split screen, and a second image, which corresponds to a second application that supports a search function, on a second split screen; and
a controller configured to: acquire broadcast information about the first image; transmit a search request for the acquired broadcast information to a server configured to provide a service for the second application through the network interface; receive search results for the broadcast information from the server through the network interface; and display the received search results on the second split screen.

2. The display device according to claim 1, wherein the broadcast information comprises a program name of the first image.

3. The display device according to claim 1, wherein the broadcast information comprises meta information comprising background music information and character information of the first image.

4. The display device according to claim 3, wherein the controller is configured to:
acquire each of the background music information and the character information, which are contained in the meta information, as a search keyword; and
display a search menu comprising the search keywords on the second split screen.

5. The display device according to claim 4, wherein the controller is configured to display the search menu according to a command received from a remote control device.

6. The display device according to claim 4, wherein the controller is configured to:
receive a command for selecting one of the search keywords; and
transmit a search request for the selected search keyword to the server according to the received command.

7. The display device according to claim 1, wherein the controller is configured to:
acquire search capability information of the second application when the broadcast information is acquired; and
transmit the search request to the server of the second application when it is determined that the search function is supported on the basis of the search capability information.

8. The display device according to claim 1, wherein the search results comprise one or more of videos, images, and addresses of contents, which are related to the broadcast information.

9. A method for operating a display device, the method comprising:
displaying each of a first image corresponding to a first application that provides real-time broadcasting on a first split screen and a second image corresponding to a second application that supports a search function on a second split screen;
acquiring broadcast information about the first image;
transmitting a search request for the acquired broadcast information to a server configured to provide a service for the second application through a network interface;
receiving search results for the broadcast information from the server through the network interface; and
displaying the received search results on the second split screen.

10. The method according to claim 9, wherein the broadcast information comprises a program name of the first image.

11. The method according to claim 9, wherein the broadcast information comprises meta information comprising background music information and character information of the first image.

12. The method according to claim 11, further comprising:
acquiring each of the background music information and the character information, which are contained in the meta information, as a search keyword; and
displaying a search menu comprising the search keywords on the second split screen.

13. The method according to claim 12, wherein the displaying of the search menu comprises displaying the search menu according to a command received from a remote control device.

14. The method according to claim 12, further comprising:
receiving a command for selecting one of the search keywords; and
transmitting a search request for the selected search keyword to the server according to the received command.

15. The method according to claim 9, further comprising:
acquiring search capability information of the second application when the broadcast information is acquired; and
transmitting the search request to the server of the second application when it is determined that the search function is supported on the basis of the search capability information.
